# DEMANDE DE BREVET EUROPEEN

(11) **EP 4 386 532 A1**
(43) Date de publication de la demande: **19.06.2024**
(21) Numéro de dépôt: 23216501.9
(22) Date de dépôt: 14.12.2023
(51) Int. Cl.: G06F 3/0483, G06F 3/0481, G06F 3/01

(54) **PROCÉDÉ DE GESTION DE FENÊTRES ET GESTIONNAIRE DE FENÊTRE D AFFICHAGE D'UN POSTE DE TRAVAIL VIRTUEL D'UN ENVIRONNEMENT IMMERSIF, PROCÉDÉ DE GESTION D ENVIRONNEMENT IMMERSIF ET SYSTÈME DE RÉALITE IMMERSIVE**

(30) Priorité: 16.12.2022 FR 2213649
(71) Demandeur: Orange, 92130 Issy-les-Moulineaux (FR)
(72) Inventeur: GUEGAN, Delphine, 92326 Chatillon (FR); KUSTER, Christine, 92326 Chatillon (FR); JOUIN, Maxime, 92326 Chatillon (FR); CHEVALLIER, Sébastien, 92326 Chatillon (FR)

(57) **Abrégé**

Un objet de l'invention est un procédé de gestion de fenêtres d'affichage (W_MNGT) d'un poste de travail virtuel dans un environnement immersif, une fenêtre d'affichage étant associée à un traitement reproduisant des données produites par le traitement associé, le procédé de gestion de fenêtres comportant régler (WP_RGL) un paramètre de reproduction (pd, pd') d'une fenêtre d'affichage (w), lors d'une modification (W_MDF) de la fenêtre d'affichage, à une valeur déterminée (pd*=v_{pd}*) en fonction d'un contexte utilisateur courant (cnx_{U}).

Ainsi, la fenêtre d'affichage étant paramétrée en fonction du contexte utilisateur courant est notamment positionnée, dimensionnée de tel sorte que l'utilisateur puisse y lire les menus, les données, etc. affichées sans effort particulier ce qui réduit le risque d'erreur d'interaction et de trouble musculosquelettique.

## Description

### Domaine technique

L'invention concerne la gestion des fenêtres d'affichage d'un poste de travail virtuel d'un environnement immersif en particulier en réalité virtuel ou en réalité augmentée.

### État de la technique

La transposition en réalité virtuelle ou augmentée d'un poste de travail ou virtualisation des outils bureautiques offrent à l'utilisateur la possibilité d'accéder à un poste de travail virtualisé, aussi nommé bureau virtuel, même en l'absence d'ordinateur (ordinateur fixe - PC ou « personal computer » en anglais, ordinateur portable - « laptop » en anglais ») et/ou d'écran, notamment grâce uniquement à l'usage de lunettes de réalité virtuelle et/ou augmentée, et éventuellement de son smartphone.

L'utilisateur dispose alors d'une plus grande variabilité dans l'organisation de son poste de travail puisque cet espace est alors étendu dans les trois dimensions. Ainsi, l'information peut être répartie tout autour de l'utilisateur.

Néanmoins, la disposition dans l'espace tridimensionnel de l'information, en particulier des diverses fenêtres bureautiques lorsque l'utilisateur est dans l'incapacité de se mouvoir et notamment d'effectuer des rotations autour de son axe vertical, peut causer des troubles musculosquelettiques TMS et/ou engendrer des erreurs d'interaction car l'accès à certaines informations se révèle difficile pour l'utilisateur en raison de leurs positions dans l'espace tridimensionnel.

En particulier, si un utilisateur debout dans un environnement dégagé peut aisément effectuer un déplacement en tournant sur lui-même, il ne pourra pas le faire en position assise (assise fixe) ou dans un environnement réel encombré. Limité par sa position, respectivement son environnement réel, il tendra à tourner la tête pour manipuler une fenêtre latérale et risquera alors de créer une torsion prolongée des cervicales occasionnant des douleurs cervicales voire à terme des céphalées, névralgies ou atteintes cervicales. Cela est sans compter que malgré le fait qu'il tourne la tête au maximum de ses capacités physiques une partie de la fenêtre latérale peut échapper à son champ visuel occasionnant une lecture partielle de l'information de la fenêtre latérale et donc une interaction erronée avec celle-ci.

De même, l'affichage tridimensionnel peut amener un positionnement extrême (très haut, très bas) des fenêtres, en particulier des fenêtres à usage fréquent, ce qui peut engendrer là encore des postures inconfortables voire des erreurs d'interaction avec celle-ci en raison de la difficulté de l'utilisateur à lire l'information qui y est reproduite.

### Exposé de l'invention

Un des buts de la présente invention est d'apporter des améliorations par rapport à l'état de la technique.

Un objet de l'invention est un procédé de gestion de fenêtres d'affichage d'un poste de travail virtuel dans un environnement immersif, une fenêtre d'affichage étant associée à un traitement reproduisant des données produites par le traitement associé, le procédé de gestion de fenêtres comportant régler un paramètre de reproduction d'une fenêtre d'affichage, lors d'une modification de la fenêtre d'affichage, à une valeur déterminée en fonction d'un contexte utilisateur courant.

Ainsi, la fenêtre d'affichage étant paramétrée en fonction du contexte utilisateur courant est notamment positionnée, dimensionnée de tel sorte que l'utilisateur puisse y lire les menus, les données, etc. affichées sans effort particulier ce qui réduit le risque d'erreur d'interaction et de trouble musculosquelettique.

Avantageusement, le procédé de gestion de fenêtres comporte déterminer la valeur du paramètre de reproduction de la fenêtre d'affichage en cours de modification en fonction du contexte utilisateur courant.

Avantageusement, le procédé de gestion de fenêtres comportant déterminer la valeur du paramètre de reproduction de la fenêtre d'affichage en cours de modification en fonction d'une zone de reproduction réglée dans laquelle une reproduction d'une fenêtre d'affichage du poste de travail virtuel est soumise à une règle de reproduction, la zone de reproduction réglée étant fonction du contexte utilisateur courant.

Ainsi, les fenêtres d'affichage peuvent être aimantées vers des zones de reproduction réglées spécifiques et/ou les zones de reproduction réglées peuvent être reproduites réduisant les modifications des fenêtres d'affichages requises par l'utilisateur mais non effectuées.

Avantageusement, le procédé de gestion de fenêtres comportant déterminer une zone de reproduction réglée en fonction du contexte utilisateur courant préalablement à la détermination de la valeur du paramètre de reproduction de la fenêtre d'affichage en cours de modification.

Avantageusement, la règle de reproduction associée à une zone de reproduction réglée est une règle parmi les suivante :
- une autorisation de reproduction de fenêtres d'affichage dans la zone de reproduction réglée, dite zone autorisée ;
- une interdiction de reproduction de fenêtres d'affichage dans la zone de reproduction réglée, dite zone interdite ;
- une priorisation de reproduction de fenêtres d'affichage dans la zone de reproduction réglée, dite zone idéale, tant que la zone de reproduction réglée comporte un espace libre suffisant pour reproduire la fenêtre d'affichage ;
- une tolérance de reproduction de fenêtres d'affichage dans la zone de reproduction réglée, dite zone de tolérance, dans laquelle une reproduction d'une fenêtre d'affichage est autorisée si la zone idéale ne comporte pas un espace libre suffisant pour reproduire la fenêtre d'affichage.

Avantageusement, modifier la fenêtre d'affichage est une modification parmi les suivantes :
- ouvrir de la fenêtre d'affichage ;
- déplacer d'une fenêtre d'affichage ;
- redimensionner la fenêtre d'affichage.

Avantageusement, le paramètre de reproduction de la fenêtre d'affichage est un paramètre parmi les suivants :
- la position de reproduction de la fenêtre d'affichage ;
- la largeur de la fenêtre d'affichage ;
- la hauteur de la fenêtre d'affichage ;
- la dimension de la fenêtre d'affichage.

Avantageusement, le procédé de gestion de fenêtres comportant mesurer le contexte utilisateur courant au moyen d'au moins un capteur.

Avantageusement, le procédé de gestion de fenêtres comportant requérir le contexte utilisateur courant au moyen d'une interface utilisateur et recevoir le contexte utilisateur déclaré de l'interface utilisateur.

Avantageusement, le contexte utilisateur courant comporte des données relatives à un utilisateur lors de la modification de la fenêtre d'affichage parmi les données suivantes :
- des données déclarées du contexte utilisateur courant ;
- des données mesurées du contexte utilisateur courant ;
- des données de position de l'utilisateur ;
- des données de champ visuel de l'utilisateur ;
- des données de mobilité de l'utilisateur ;
- des données relatives à l'environnement réel dans lequel se trouve l'utilisateur.

Un objet de l'invention est également un procédé de gestion d'un environnement immersif comportant un poste de travail virtuel, le poste de travail virtuel comportant une fenêtre d'affichage associée à un traitement reproduisant des données produites par le traitement associé, le procédé de gestion d'environnement immersif comportant déclencher une modification d'une fenêtre d'affichage, le déclenchement de la modification de la fenêtre d'affichage déclenchant régler un paramètre de reproduction d'une fenêtre d'affichage à une valeur déterminée en fonction d'un contexte utilisateur courant préalablement à la reproduction de la fenêtre d'affichage modifiée.

Avantageusement, selon une implémentation de l'invention, les différentes étapes du procédé selon l'invention sont mises en oeuvre par un logiciel ou programme d'ordinateur, ce logiciel comprenant des instructions logicielles destinées à être exécutées par un processeur de données d'un dispositif faisant partie d'un système de réalité immersive et étant conçus pour commander l'exécution des différentes étapes de ce procédé.

L'invention vise donc aussi un programme comprenant des instructions de code de programme pour l'exécution des étapes du procédé de gestion de fenêtres d'affichage et/ou du procédé de gestion d'un environnement immersif lorsque ledit programme est exécuté par un processeur.

Ce programme peut utiliser n'importe quel langage de programmation et être sous la forme de code source, code objet ou code intermédiaire entre code source et code objet tel que dans une forme partiellement compilée ou dans n'importe quelle autre forme souhaitable.

Un objet de l'invention est aussi un gestionnaire de fenêtres d'affichage d'un poste de travail virtuel dans un environnement immersif, une fenêtre d'affichage étant associée à un traitement reproduisant des données produites par le traitement associé, le gestionnaire de fenêtres d'affichage comportant un régulateur de paramètres de reproduction de fenêtres d'affichage apte à régler, lors d'une modification d'une fenêtre d'affichage, un paramètre de reproduction de la fenêtre d'affichage à une valeur déterminée en fonction d'un contexte utilisateur courant.

Un objet de l'invention est également un système de réalité immersive comportant :
- un dispositif de reproduction d'environnement immersif ;
- un récepteur de contexte utilisateur ; et
- un gestionnaire d'environnement immersif comportant un poste de travail virtuel, le poste de travail virtuel comportant une fenêtre d'affichage associée à un traitement reproduisant des données produites par le traitement associé, le gestionnaire d'environnement immersif comportant un déclencheur du transformateur de fenêtres d'affichage, le déclencheur du transformateur de fenêtres d'affichage étant apte à déclencher un régulateur de paramètres de reproduction de fenêtres d'affichage apte à régler un paramètre de reproduction de la fenêtre d'affichage à une valeur déterminée en fonction d'un contexte utilisateur courant préalablement à la reproduction de la fenêtre d'affichage modifiée.

Avantageusement, le récepteur de contexte utilisateur est un dispositif parmi les suivants :
- une interface utilisateur du dispositif de reproduction d'environnement immersif ;
- un capteur.

### Brève description des dessins

Les caractéristiques et avantages de l'invention apparaîtront plus clairement à la lecture de la description, faite à titre d'exemple, et des figures s'y rapportant qui représentent :
Figure 1a, un schéma simplifié du procédé de gestion de fenêtres d'affichage d'un poste de travail virtuel dans un environnement immersif selon l'invention,
Figure 1b, un schéma simplifié d'une un schéma simplifié phase de détermination de valeur d'un paramètre de reproduction de la fenêtre d'affichage w en cours de modification d'un mode de réalisation particulier du procédé de gestion de fenêtres d'affichage d'un poste de travail virtuel dans un environnement immersif selon l'invention,
Figure 2, un schéma simplifié d'un procédé de gestion d'un environnement immersif selon l'invention,
Figure 3, un schéma simplifié d'un gestionnaire de fenêtres d'affichage d'un poste de travail virtuel dans un environnement immersif et d'un système de réalité immersive selon l'invention,
Figure 4a, un schéma simplifié d'un environnement immersif dans un cas d'usage particulier mis en oeuvre par un procédé de gestion d'un environnement immersif et/ou un système de réalité immersive soit selon l'invention, soit utilisant un procédé de gestion de fenêtres et/ou un gestionnaire de fenêtres d'affichage selon l'invention,
Figure 4b, un schéma simplifié illustrant des zones de reproductions réglées utilisées dans un mode de réalisation particulier de l'invention.

### Description des modes de réalisation

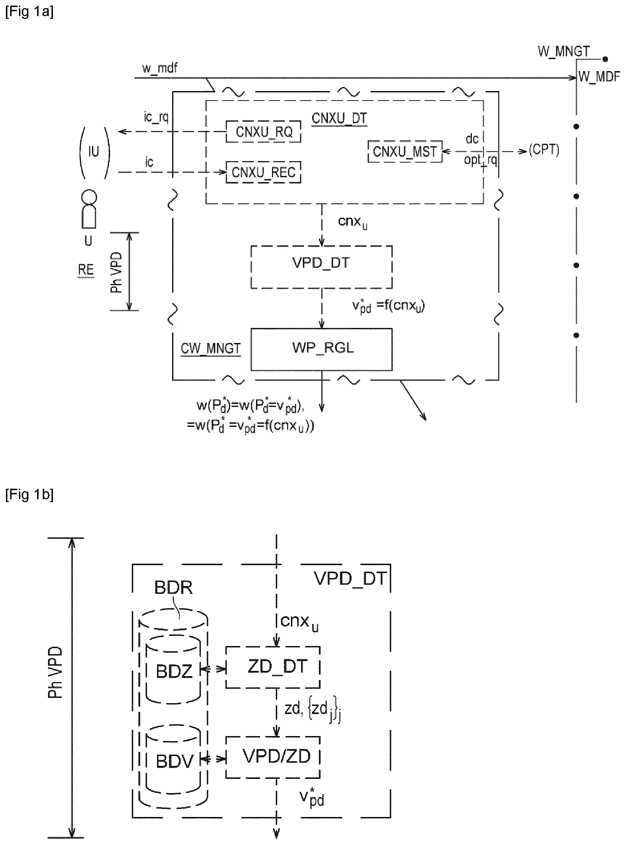

La figure 1a illustre un schéma simplifié du procédé de gestion de fenêtres d'affichage d'un poste de travail virtuel dans un environnement immersif selon l'invention.

Le procédé de gestion de fenêtres d'affichage W_MNGT gère les fenêtres d'affichage d'un poste de travail virtuel dans un environnement immersif. Une fenêtre d'affichage est associée à un traitement reproduisant des données produites par le traitement associé. Le procédé de gestion de fenêtres W_MNGT comporte : régler WP_RGL un paramètre de reproduction pd, pd' d'une fenêtre d'affichage w, lors d'une modification W_MDF de la fenêtre d'affichage, à une valeur déterminée pd*=v_{pd}* en fonction d'un contexte utilisateur courant cnx_{U}.

En particulier, le procédé de gestion de fenêtres W_MNGT comporte : déterminer VPD_DT la valeur du paramètre de reproduction pd*=vpd* de la fenêtre d'affichage w en cours de modification en fonction du contexte utilisateur courant cnx_{U}.

En particulier, modifier W_MDF la fenêtre d'affichage w est une modification parmi les suivantes :
- ouvrir W_OP de la fenêtre d'affichage w;
- déplacer WP_MDF(pd'=f(pₚₒₛ')) d'une fenêtre d'affichage w ;
- redimensionner WP_MDF(pd'=f(p_{dim}')) la fenêtre d'affichage w.

En particulier, le paramètre de reproduction pd, pd' de la fenêtre d'affichage w est un paramètre parmi les suivants :
- la position pₚₒₛ, pₚₒₛ' de reproduction de la fenêtre d'affichage ;
- la largeur p_{L}, p_{L}' de la fenêtre d'affichage ;
- la hauteur pₕ, pₕ' de la fenêtre d'affichage ;
- la dimension p_{dim}, p_{dim}' de la fenêtre d'affichage.

En particulier, le procédé de gestion de fenêtres W_MNGT comporte : mesurer CNXU_MST le contexte utilisateur courant cnx_{U} au moyen d'au moins un capteur CPT.

En particulier, le procédé de gestion de fenêtres W_MNGT comporte, de manière alternative ou combinatoire à la mesure CNXU_MST de contexte utilisateur cnxU : requérir CNXU_RQ le contexte utilisateur courant cnx_{U} au moyen d'une interface utilisateur IU et recevoir CNXU_REC le contexte utilisateur cnx_{U} déclaré de l'interface utilisateur IU.

En particulier, le contexte utilisateur courant cnx_{U} comporte des données relatives à un utilisateur U lors de la modification W_MDF de la fenêtre d'affichage w parmi les données suivantes :
- des données déclarées ic du contexte utilisateur courant cnxU ;
- des données mesurées de du contexte utilisateur courant cnxU ;
- des données de position de l'utilisateur ;
- des données de champ visuel de l'utilisateur ;
- des données de mobilité de l'utilisateur ;
- des données relatives à l'environnement réel dans lequel se trouve l'utilisateur.

Par contexte utilisateur courant est notamment entendu une ou plusieurs capacités relatives à l'utilisateur : capacité visuelle, capacité de mobilité... liées en particulier à une ou plusieurs contraintes physiques relatives à l'utilisateur, c'est-à-dire une contrainte relative à au moins une partie du corps de l'utilisateur : contrainte de champ visuel, contrainte de déplacement, contrainte de mouvement (bras, jambe, tête, etc.) ...

En effet, un utilisateur dans un contexte de position debout sans contrainte supplémentaire a la capacité de se retourner et donc de voir tout autour de lui. Mais la visualisation prolongée de fenêtre placée au-dessus d'une ligne placée à hauteur de ses yeux pouvant engendrer une fatigue visuelle, il en sera tenu compte par le procédé de gestion de l'invention pour régler le positionnement des fenêtres sous cette ligne. Dans ce même contexte de position debout sans contrainte supplémentaire, l'interaction avec des fenêtres basses nécessitant à l'utilisateur de se baisser peut engendrer des troubles musculosquelettiques liés à la répétition de ces interactions « basses », c'est-à-dire avec des fenêtres placées à une hauteur basse.

Dans un autre contexte utilisateur, par exemple dans un contexte de position assise dans un véhicule, la capacité de mouvement de l'utilisateur est limitée, d'autant plus s'il est placé à côté d'un passager, de la carrosserie du véhicule... A nouveau, la visualisation prolongée de fenêtre placée au-dessus d'une ligne placée à hauteur de ses yeux pouvant engendrer une fatigue visuelle sauf dans le cas d'une position assise semi-allongée, il en sera tenu compte par le procédé de gestion de l'invention pour régler le positionnement des fenêtres sous cette ligne. Dans ce même contexte de position, le procédé de gestion réglera la position des fenêtres au-dessus de la hauteur d'assise pour tenir compte qu'en-dessous de celle-ci l'interaction de l'utilisateur sera difficile voire impossible.

En outre, dans le cas de réalité augmentée, le contexte utilisateur courant comprendra la position de source lumineuse autour de l'utilisateur (fenêtre, lampe, etc.). Ainsi, le procédé de gestion évitera de positionner une fenêtre sur la source lumineuse, voire à coté de celle-ci limitant les risques d'éblouissement de l'utilisateur par la source lumineuse pouvant engendrer un inconfort de l'utilisateur, voire des erreurs d'interaction.

Le procédé de gestion de fenêtre W_MNGT est mis en oeuvre lors d'une modification d'une fenêtre d'affichage W_MDF du poste de travail virtuel de l'environnement immersif. En particulier, une demande w_mdf de modification d'une fenêtre d'affichage w, wi déclenchant la modification W_MDF de la fenêtre d'affichage w, wi déclenche la mise en oeuvre pour cette fenêtre d'affichage w, wi du procédé de gestion de fenêtre W_MNGT.

En particulier, le procédé de gestion de fenêtre W_MNGT comporte une détermination CNXU_DT d'un contexte utilisateur cnx_{U}.

Le contexte utilisateur cnx_{U} est déterminée notamment en fonction de données mesurées de fournies par exemple par un capteur CPT tel que notamment un capteur implémenté dans un dispositif de reproduction d'environnement immersif (notamment les lunettes de réalité virtuelles portées par l'utilisateur), le gestionnaire de l'environnement immersif (par exemple le smartphone de l'utilisateur), des objets connectés portées par l'utilisateur (par exemple, une montre connectée), mais aussi des objets connectées placés dans l'environnement réel RE de l'utilisateur (par exemple des données fournies par le véhicule ou la pièce dans lequel se trouve l'utilisateur...), etc. En particulier, le procédé de gestion de fenêtre W_MNGT comporte mesurer CNXU_MST des données relatives à l'utilisateur et/ou à son environnement réel au moyen de capteur CPT. Par exemple, la mesure CNXU_MST reçoit des données captées de soit de manière régulière, soit suite à une requête de mesure cpt_rq reçue par le capteur CPT par exemple d'un gestionnaire de l'environnement immersif ou directement de l'étape de mesure CNXU_MST.

Le contexte utilisateur cnx_{U} est déterminée notamment en fonction de données déclarées ic par l'utilisateur U au moyen d'une interface utilisateur IU (tel qu'un clavier, une manette, un écran tactile, un assistant vocal, une interaction avec le gestionnaire de l'environnement immersif - par exemple, par un geste capté par une caméra placée sur des lunettes de réalité virtuelle ou une utilisation d'un périphérique tel qu'une manette de réalité virtuelle, etc.). En particulier, le procédé de gestion de fenêtre W_MNGT comporte recevoir CNXU_REC les données déclarées ic du contexte utilisateur, notamment d'une interface utilisateur IU. L'utilisateur U déclare des données ic relatives au contexte utilisateur notamment suite à une requête ic_rq de données de contexte utilisateur reproduite par une interface utilisateur IU (tel que le dispositif de reproduction de l'environnement immersif, un écran - notamment l'écran d'un smartphone de l'utilisateur U), un haut-parleur, etc). En particulier, le procédé de gestion de fenêtre W_MNGT comporte requérir CNXU_REQ une déclaration de données du contexte utilisateur ic_rq, notamment à une interface utilisateur lU.

En particulier, la détermination CNXU_DT d'un contexte utilisateur cnx_{U} comporte une ou plusieurs des étapes suivantes :
- la mesure CNXU_MST des données relatives à l'utilisateur et/ou à son environnement réel au moyen de capteur CPT ;
- la requête CNXU_REQ d'une déclaration de données du contexte utilisateur ic_rq, notamment à une interface utilisateur IU ;
- la réception CNXU_REC les données déclarées ic du contexte utilisateur, notamment d'une interface utilisateur lU.

En particulier, le procédé de gestion de fenêtre W_MNGT comporte déterminer une valeur d'un paramètre de reproduction pd, pd' de la fenêtre d'affichage w en cours de modification notamment lors d'une phase de détermination de valeur de paramètre de reproduction Ph VPD dont la figure 1b illustre un mode de réalisation particulier.

En particulier, le procédé de gestion de fenêtre W_MNGT comporte déterminer VPD_DT la valeur du paramètre de reproduction pd*=vpd* de la fenêtre d'affichage w en cours de modification en fonction du contexte utilisateur courant cnx_{U}. Notamment, la détermination VPD_DT de la valeur du paramètre de reproduction en fonction du contexte utilisateur courant cnx_{U} est effectuée lors de la phase de détermination de valeur de paramètre de reproduction Ph VPD. En particulier, le contexte utilisateur courant cnx_{U} utilisé pour déterminer la valeur d'un paramètre de reproduction de la fenêtre w, wi en cours de modification est fourni par la détermination CNXU_DT d'un contexte utilisateur cnx_{U}, et/ou la mesure CNXU_MST des données relatives à l'utilisateur et/ou à son environnement réel au moyen de capteur CPT et/ou la réception CNXU_REC les données déclarées ic du contexte utilisateur, notamment d'une interface utilisateur IU.

Le procédé de gestion de fenêtre W_MNGT fournit alors une valeur d'un paramètre de reproduction de la fenêtre w, wi en cours de modification fonction du contexte utilisateur courant v_{pd}*=f(cnx_{U}) notamment en sortie de la détermination VPD_DT de la valeur du paramètre de reproduction en fonction du contexte utilisateur courant cnx_{U} et/ou de la phase de détermination de valeur de paramètre de reproduction Ph VPD.

Le procédé de gestion de fenêtres W_MNGT comporte : régler WP_RGL un paramètre de reproduction pd, pd' d'une fenêtre d'affichage w, lors d'une modification W_MDF de la fenêtre d'affichage, à une valeur déterminée pd*=v_{pd}* en fonction d'un contexte utilisateur courant cnx_{U}. En particulier, le réglage WP_RGL du paramètre de reproduction pd, pd' de la fenêtre d'affichage w utilise la valeur de paramètre de reproduction w(pd*)=w(pd*=v_{pd}*) préalablement déterminée notamment lors de la phase de détermination de valeur de paramètre de reproduction Ph VPD et/ou par la détermination VPD_DT de la valeur du paramètre de reproduction en fonction du contexte utilisateur courant cnx_{U :} w(pd*)=w(pd*= v_{pd}*=f(cnx_{U})).

En particulier, le procédé de gestion de fenêtres W_MNGT comporte : gérer de manière contextuelle une fenêtre d'affichage CW_MNGT. La gestion contextuelle CW_MNGT d'une fenêtre d'affichage est fonction d'un contexte utilisateur cnx_{U}.

En particulier, la gestion contextuelle CW_MNGT d'une fenêtre d'affichage comporte le réglage WP_RGL un paramètre de reproduction pd, pd' d'une fenêtre d'affichage w, lors d'une modification W_MDF de la fenêtre d'affichage, à une valeur déterminée pd*=v_{pd}* en fonction d'un contexte utilisateur courant cnx_{U}. Eventuellement, la gestion contextuelle CW_MNGT d'une fenêtre d'affichage comporte en outre une ou plusieurs des étapes suivantes :
- la détermination CNXU_DT d'un contexte utilisateur cnx_{U} ;
- la mesure CNXU_MST des données relatives à l'utilisateur et/ou à son environnement réel au moyen de capteur CPT ;
- la requête CNXU_REQ d'une déclaration de données du contexte utilisateur ic_rq, notamment à une interface utilisateur IU ;
- la réception CNXU_REC les données déclarées ic du contexte utilisateur, notamment d'une interface utilisateur IU ;
- la phase de détermination de valeur de paramètre de reproduction Ph VPD ;
- la détermination VPD_DT de la valeur du paramètre de reproduction en fonction du contexte utilisateur courant cnx_{U}.

La figure 1b illustre un schéma simplifié phase de détermination Ph VPD de valeur d'un paramètre de reproduction pd, pd' de la fenêtre d'affichage w en cours de modification d'un mode de réalisation particulier du procédé de gestion de fenêtres W_MNGT d'affichage W_MNGT d'un poste de travail virtuel dans un environnement immersif selon l'invention.

En particulier, le procédé de gestion de fenêtres W_MNGT comporte : déterminer VPD/ZD la valeur du paramètre de reproduction pd*=vpd* de la fenêtre d'affichage en cours de modification en fonction d'une zone de reproduction réglée zd, {zdⱼ}ⱼ dans laquelle une reproduction d'une fenêtre d'affichage w du poste de travail virtuel est soumise à une règle de reproduction rd, {rdⱼ}ⱼ, la zone de reproduction réglée zd, {zdⱼ}ⱼ étant fonction du contexte utilisateur courant cnx_{U}.

Dans un mode de réalisation particulier, la détermination VPD/ZD de la valeur du paramètre de reproduction consulte en fonction de la zone de reproduction réglée une base de valeur de paramètre de reproduction BDV ou une base de règle de reproduction BDR. La base de valeur de paramètre de reproduction BDV ou la base de règle de reproduction BDR comporte plusieurs règles de calcul de valeur de paramètre de reproduction associées à une règle de reproduction. En fonction du la zone de reproduction réglée (en particulier de la règle de reproduction de cette zone de reproduction réglée), la détermination valeur de paramètre de reproduction comporte : consulter la base de valeur de paramètre de reproduction BDV ou la base de règle de reproduction BDR en de la règle de reproduction, y lire la règle de calcul de la valeur du paramètre de reproduction associée à cette règle de reproduction, exécuter le calcul proposée par la règle de calcul de la valeur du paramètre de reproduction en fonction du paramètre correspondant de la zone de reproduction et fournir ainsi une valeur de paramètre de reproduction.

En particulier, le procédé de gestion de fenêtres W_MNGT comporte : déterminer ZD_DT une zone de reproduction réglée zd, {zdⱼ}ⱼ en fonction du contexte utilisateur courant cnx_{U} de la valeur du paramètre de reproduction pd*=vpd* de la fenêtre d'affichage en cours de modification. La détermination ZD_DT de la zone de reproduction réglée est notamment effectuée préalablement à la détermination VPD/ZD.

Dans un mode de réalisation particulier, la détermination de zone de reproduction réglée ZD_DT consulte en fonction du contexte utilisateur courant cnx_{U} une base de zone de reproduction réglée BDZ ou une base de règle de reproduction BDR. La base de zone de reproduction réglée BDZ ou la base de règle de reproduction BDR comporte plusieurs règles de reproduction {rdⱼ}ⱼ associées à un ou plusieurs contexte géographique cnx. Par exemple, la détermination de zone de reproduction réglée comporte : déterminer au moins une zone géographique de l'environnement immersif correspondant à un contexte géographique donné en fonction du contexte utilisateur cnx_{U}. Le contexte géographique donné correspond à au moins l'un des contextes géographiques associés à une règle de reproduction dans la base de zone de reproduction réglée BDZ ou la base de règle de reproduction BDR. Puis, en fonction du contexte géographique correspond à la zone géographique, la détermination de zone de reproduction réglée comporte : consulter la base de zone de reproduction réglée BDZ ou la base de règle de reproduction BDR en fonction du contexte géographique associé à la zone géographique déterminée, y lire la règle de reproduction associée au contexte géographique, associer la règle de reproduction lue à la zone géographique déterminée fournissant ainsi une zone de reproduction réglée comportant la zone géographique déterminée et la règle de reproduction associée.

La zone géographique est définie notamment par une position et éventuellement une dimension dans l'environnement immersif, par exemple un point correspondant à l'arrête en haut à droit (éventuellement près de l'utilisateur) pour une zone de type rectangulaire (respectivement pavé) et une largeur, une hauteur (respectivement une profondeur) ou un point centrale de la zone géographique et soit un diamètre pour une zone géographique circulaire ou sphérique, soit un diamètre et une hauteur pour une zone géographique cylindrique, soit une largeur, une hauteur (respectivement une profondeur) pour une zone de type rectangulaire (respectivement pavé)...

En particulier, la règle de reproduction rd, {rdⱼ}ⱼ associée à une zone de reproduction réglée zd, {zdⱼ}ⱼ est une règle parmi les suivante :
- une autorisation de reproduction de fenêtres d'affichage dans la zone de reproduction réglée, dite zone autorisée ;
- une interdiction de reproduction de fenêtres d'affichage dans la zone de reproduction réglée, dite zone interdite ;
- une priorisation de reproduction de fenêtres d'affichage dans la zone de reproduction réglée, dite zone idéale, tant que la zone de reproduction réglée comporte un espace libre suffisant pour reproduire la fenêtre d'affichage ;
- une tolérance de reproduction de fenêtres d'affichage dans la zone de reproduction réglée, dite zone de tolérance, dans laquelle une reproduction d'une fenêtre d'affichage est autorisée si la zone idéale ne comporte pas un espace libre suffisant pour reproduire la fenêtre d'affichage.

Par exemple, la(les) zone(s) de reproduction réglée(s) peuvent être fournie(s) par l'utilisateur sous forme de déclaration de contexte utilisateur ic reçue CNXU_REC par la gestion de fenêtre d'affichage W_MNGT : ic =f(zd), soit que l'utilisateur trace les frontières de la zone de reproduction réglée déclarée, soit que l'utilisateur sélectionne une forme et pointe un ou plusieurs point définissant la position et la dimension de cette forme constituant la zone de reproduction réglée déclarée, etc. La déclaration de zone de reproduction réglée peut être effectuée suite à une requête ic_rq comportant éventuellement la règle de reproduction rd qui sera associée à la zone de reproduction réglée à déclarer. Sinon, l'utilisateur peut sélectionner et/ou déclarer une règle de reproduction lors ou directement après la définition de la zone de reproduction.

En particulier, la détermination VPD/ZD de la valeur du paramètre de reproduction pd*=vpd* de la fenêtre d'affichage en cours de modification en fonction d'une zone de reproduction réglée zd, {zdⱼ}ⱼ utilise la zone de reproduction réglée zd, {zdⱼ}ⱼ déterminée par la détermination ZD_DT de zone(s) de reproduction(s) réglée(s) zd, {zdⱼ}ⱼ en fonction du contexte utilisateur courant cnx_{U}.

En particulier, le procédé de gestion de fenêtres W_MNGT comporte : déterminer VPD_DT la valeur du paramètre de reproduction pd*=vpd* de la fenêtre d'affichage en cours de modification en fonction du contexte utilisateur courant cnxU.

Dans un mode de réalisation alternatif ou complémentaire au précédent, la détermination VPD/ZD de la valeur du paramètre de reproduction et/ou la détermination de la zone de reproduction réglées ZD_FT et/ou la détermination de la valeur du paramètre de reproduction VPD_DT est effectuée par apprentissage, respectivement du paramétrage des fenêtres d'affichage par l'utilisateur en fonction de zone(s) de reproduction réglée(s) reproduite(s), de la définition par l'utilisateur de zone(s) de reproduction réglée(s) dans un contexte utilisateur donné cnx_{U}, du paramétrage des fenêtres d'affichage par l'utilisateur dans un contexte utilisateur donné cnx_{U}. A noter que l'apprentissage peut être réalisé avec préalablement à l'utilisation de l'environnement immersif, notamment lors d'une configuration de la gestion de l'environnement immersif, mais aussi à tout moment lors de l'utilisation de la gestion de l'environnement immersif.

Dans un mode de réalisation alternatif ou complémentaire au précédent, la détermination VPD/ZD de la valeur du paramètre de reproduction et/ou la détermination de la zone de reproduction réglées ZD_FT et/ou la détermination de la valeur du paramètre de reproduction VPD_DT est effectuée par intelligence artificielle.

Un mode de réalisation particulier du procédé de gestion d'un environnement immersif est un programme comprenant des instructions de code de programme pour l'exécution des étapes du procédé de gestion de fenêtres W_MNGT d'affichage W_MNGT lorsque ledit programme est exécuté par un processeur.

Selon les cas d'usage, le procédé de gestion de fenêtre d'affichage W_MNGT comporte une introduction des éléments visuels indiquant à l'utilisateur les limites ergonomiques préconisées : zones idéales, zones tolérables, zones à éviter ..., par exemple en utilisant une ou plusieurs des étapes suivantes :
- mettre en évidence des recommandations de limites latérales et verticales (haut et bas) par des incrustations visuelles ;
- forcer une position de fenêtre à la position requise par l'utilisateur (ainsi, l'invention laisse la possibilité de laisser l'utilisateur définir les positions de ses fenêtres sans le contraindre),
- mémoriser les diverses dispositions de l'espace bureautique en fonction du contexte et de réafficher le bureau comme préenregistré suivant le contexte courant si l'utilisateur le souhaite
- adapter l'poste de travail en cas de changement de position ou de déplacement en cours de session (adaptation paramétrable pour être automatique ou sur requête/validation de l'utilisateur)
- inclure des éléments visuels d'accroche au loin pour inciter à une relâche visuelle (exercices oculaires).

L'invention guide ainsi l'utilisateur pour avoir les meilleures conditions d'utilisation du poste de travail virtuel dans l'environnement immersif.

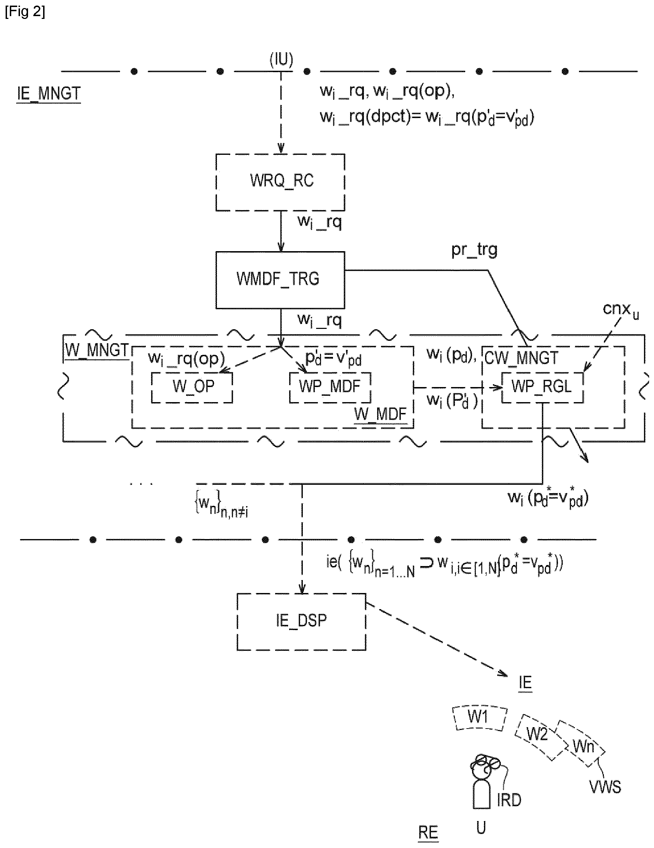

La figure 2 illustre un schéma simplifié d'un procédé de gestion d'un environnement immersif selon l'invention.

Le procédé de gestion d'un environnement immersif IE_MNGT gère un environnement immersif ie, IE, notamment un environnement d'une réalité virtuelle ou un environnement virtuel d'une réalité augmentée. L'environnement immersif IE comporte un poste de travail virtuel VWS, lui-même comportant une fenêtre d'affichage W1, W2...Wₙ associée à un traitement reproduisant des données produites par le traitement associé. Le procédé de gestion d'environnement immersif IE_MNGT comporte : déclencher WMDF_TRG une modification d'une fenêtre d'affichage, le déclenchement WMDF_TRG de la modification de la fenêtre d'affichage déclenchant pr_trg régler WP_RGL un paramètre de reproduction pd, pd' d'une fenêtre d'affichage à une valeur déterminée en fonction d'un contexte utilisateur courant cnxU préalablement à la reproduction de la fenêtre d'affichage modifiée.

Par environnement immersif est entendu à la fois l'environnement immersif IE dans lequel l'utilisateur U et/ou un avatar de l'utilisateur U évolue à savoir un environnement virtuel tridimensionnel 3D de réalité virtuelle RV ou de réalité augmentée RA, c'est-à-dire l'environnement immersif reproduit, et par abus de langage le signal de reproduction de l'environnement immersif ie, c'est-à-dire le signal reçu par un dispositif de reproduction immersif (lunettes 3D, lunettes RA, lunettes RV, holographe, etc.) qui reproduit l'environnement immersif reproduit IE.

De manière analogie, par fenêtre d'affichage est entendu à la fois une fenêtre d'affichage W1, W2... Wn avec laquelle l'utilisateur U et/ou un avatar de l'utilisateur U interagit à savoir une fenêtre virtuelle d'une environnement virtuel tridimensionnel 3D de réalité virtuelle RV ou de réalité augmentée RA, c'est-à-dire la fenêtre d'affichage reproduite, et par abus de langage le signal de reproduction de la fenêtre w, {wₙ}ₙ, c'est-à-dire le signal reçu par un dispositif de reproduction immersif (lunettes 3D, lunettes RA, lunettes RV, holographe, etc.) qui reproduit la fenêtre d'affichage W1, W2... Wn reproduite.

En particulier, le procédé de gestion d'un environnement immersif IE_MNGT comporte : recevoir WRQ_RC une requête wi_rq relative à une fenêtre d'affichage provenant notamment d'une interface utilisateur lU, voire d'une étape d'un procédé (non illustrée) tel que le procédé de gestion d'un environnement immersif IE_MNGT, un procédé de gestion de traitement (non illustré) mettant en oeuvre un traitement associé à une des fenêtres d'affichage de l'environnement immersif IE, un procédé de gestion de fenêtre d'affichage W_MNGT, etc.

En particulier, la requête reçue wi_rq relative à une fenêtre d'affichage par le procédé de gestion d'un environnement immersif IE_MNGT est notamment une requête d'ouverture d'une nouvelle fenêtre d'affichage wi_rq(op) associée à un nouveau traitement ou à un traitement en cours d'exécution, une requête de déplacement d'une fenêtre d'affichage wi_rq(dpct) indiquant éventuellement la position d'arrivée souhaitée wi_rq(pd'=v_{pd}'), une requête de réglage d'un paramètre de reproduction indiquant éventuellement la valeur du paramètre de reproduction souhaitée wi_rq(pd'=v_{pd}').

En particulier, la réception WRQ_RC d'une requête wi_rq relative à une fenêtre d'affichage la fournit au déclenchement WMDF_TRG de modification de la fenêtre d'affichage qui déclenche pr_trg, en fonction de la requête reçue wi_rq relative à une fenêtre d'affichage, le réglage WP_RGL du paramètre de reproduction de la fenêtre d'affichage en fonction du contexte utilisateur cnx_{U}. En particulier, le déclenchement WMDF_TRG de modification de la fenêtre d'affichage relaie la requête reçue wi_rq relative à une fenêtre d'affichage à la gestion de fenêtre d'affichage W_MNGT pour effectuer la modification requise.

En particulier, la gestion de fenêtre d'affichage W_MNGT comporte : modifier la fenêtre d'affichage W_MDF en fonction de requête reçue wi_rq relative à une fenêtre d'affichage. Notamment, la gestion de fenêtre d'affichage W_MNGT comporte : ouvrir une fenêtre d'affichage W_OP en fonction de requête reçue wi_rq(op) d'ouverture d'une fenêtre d'affichage. Eventuellement, la gestion de fenêtre d'affichage W_MNGT comporte : modifier WP_MDF un paramètre de reproduction selon la requête wi_rq(pd'=v_{pd}'). La modification de la fenêtre d'affichage W_MDF en fonction de requête reçue wi_rq relative à une fenêtre d'affichage comporte, par exemple, une ou plusieurs des étapes suivantes :
- ouvrir une fenêtre d'affichage W_OP en fonction de requête reçue wi_rq(op) d'ouverture d'une fenêtre d'affichage ;
- modifier WP_MDF un paramètre de reproduction selon la requête wi_rq(pd'=v_{pd}').

En particulier, le procédé de gestion de fenêtres W_MNGT comporte : le réglage WP_RGL du paramètre de reproduction pd, pd' d'une fenêtre d'affichage w, lors de la modification W_MDF de la fenêtre d'affichage, à une valeur déterminée pd*=v_{pd}* en fonction d'un contexte utilisateur courant cnx_{U}. Eventuellement, la modification W_MDF de la fenêtre d'affichage fourni des paramètres de reproduction de la fenêtre de reproduction modifiée wi(pd), wi(pd') au réglage WP_RGL qui règle un ou plusieurs de ces paramètres de reproduction en fonction du contexte utilisateur courant cnx_{U}. Le réglage WP_RGL est alors effectué après la modification W_MDF.

Ainsi, le réglage WP_RGL peut tenir compte de la modification souhaitée wi_rq. Par exemple, si la modification de position requise amène la fenêtre d'affichage dans une position dans laquelle sa lecture sera difficile pour l'utilisateur, notamment dans une zone de reproduction interdite, le réglage pourra rechercher la position acceptable la plus proche de la position requise (notamment dans une zone de reproduction autorisée, voire tolérée) pour déplacer la fenêtre d'affichage.

En particulier, le procédé de gestion de fenêtres W_MNGT comporte : gérer de manière contextuelle une fenêtre d'affichage CW_MNGT. La gestion contextuelle CW_MNGT d'une fenêtre d'affichage est fonction d'un contexte utilisateur cnx_{U}. La gestion contextuelle CW_MNGT d'une fenêtre d'affichage comporte le réglage WP_RGL un paramètre de reproduction pd, pd' d'une fenêtre d'affichage w, lors d'une modification W_MDF de la fenêtre d'affichage, à une valeur déterminée pd*=v_{pd}* en fonction d'un contexte utilisateur courant cnx_{U}.

L'environnement immersif ie comporte alors l'ensemble des fenêtres d'affichage non modifiées {*wₙ*}_{*n*, *n*≠*i*} et la ou les fenêtres modifiées wi(pd*=v_{pd}*) pour lesquelles au moins un paramètre de reproduction a été réglée en fonction du contexte utilisateur cnx_{U}.

Soit un procédé mis en oeuvre par un dispositif de reproduction IRD distinct du gestionnaire d'environnement immersif mettant en oeuvre le procédé de gestion d'un environnement immersif IE_MNGT, soit le procédé de gestion d'un environnement immersif IE_MNGT lui-même comporte : reproduire de l'environnement immersif IE_DSP reçoit le signal de reproduction de l'environnement immersif ie comportant le cas échéant une fenêtre modifiée pour laquelle au moins un paramètre de reproduction a été réglée en fonction du contexte utilisateur cnx_{U}.

Un mode de réalisation particulier du procédé de gestion d'un environnement immersif WMDF_TRG est un programme comprenant des instructions de code de programme pour l'exécution des étapes du procédé de gestion d'un environnement immersif WMDF_TRG lorsque ledit programme est exécuté par un processeur.

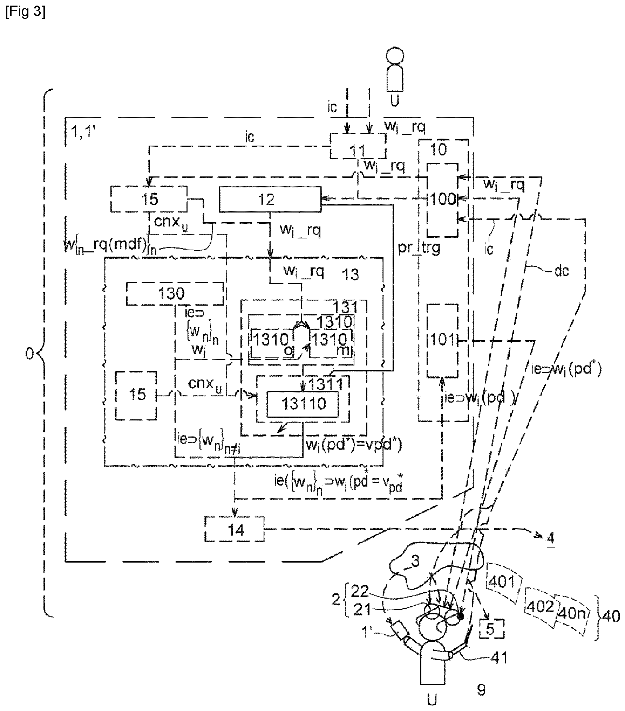

La figure 3 illustre un schéma simplifié d'un gestionnaire de fenêtres d'affichage d'un poste de travail virtuel dans un environnement immersif et d'un système de réalité immersive selon l'invention.

Le gestionnaire 13 de fenêtres d'affichage est apte à gérer des fenêtres d'affichage d'un poste de travail virtuel 40 dans un environnement immersif 4. Une fenêtre d'affichage 401, 402... 40n est associée à un traitement reproduisant des données produites par le traitement associé. Le gestionnaire 13 de fenêtres d'affichage comporte un régulateur 13110 de paramètres de reproduction de fenêtres d'affichage apte à régler, lors d'une modification d'une fenêtre d'affichage, un paramètre de reproduction pd, pd' de la fenêtre d'affichage à une valeur déterminée pd*=v_{pd}* en fonction d'un contexte utilisateur courant cnxU.

Le gestionnaire 13 de fenêtres d'affichage est utilisé lors d'une modification d'une fenêtre d'affichage W_MDF du poste de travail virtuel de l'environnement immersif. En particulier, une demande w_mdf de modification d'une fenêtre d'affichage w, wi apte à déclencher un transformateur 1310 de fenêtre d'affichage w, wi déclenche la mise en oeuvre pour cette fenêtre d'affichage w, wi du gestionnaire 13 de fenêtres d'affichage.

En particulier, le gestionnaire 13 de fenêtres d'affichage comporte un analyseur 15 de contexte apte à déterminer un contexte utilisateur cnx_{U}.

Le contexte utilisateur cnx_{U} est déterminée notamment en fonction de données mesurées de fournies par exemple par un capteur 20, 5 tel que notamment un capteur 20 implémenté dans un dispositif de reproduction d'environnement immersif 2 (notamment les lunettes de réalité virtuelles portées par l'utilisateur), le gestionnaire 1, 1' de l'environnement immersif (par exemple le smartphone 1' de l'utilisateur), des objets connectés portées par l'utilisateur (par exemple, une montre connectée), mais aussi des objets connectées 5 placés dans l'environnement réel 9 de l'utilisateur (par exemple des données fournies par le véhicule ou la pièce dans lequel se trouve l'utilisateur...), etc. En particulier, le gestionnaire 13 de fenêtre comporte un dispositif de mesure (non illustré) des données relatives à l'utilisateur et/ou à son environnement réel 9 au moyen de capteur 20, 5. Par exemple, le dispositif de mesure reçoit, notamment au moyen d'un récepteur 100, des données captées de soit de manière régulière, soit suite à une requête de mesure (non illustrée) reçue par le capteur 20, 5 par exemple d'un gestionnaire de l'environnement immersif 1, 1' ou directement du dispositif de mesure.

Le contexte utilisateur cnx_{U} est déterminée notamment en fonction de données déclarées ic par l'utilisateur U au moyen d'une interface utilisateur 11, 21, 41 tel qu'un clavier 11, une manette, un écran tactile, un assistant vocal, une interaction avec le gestionnaire 1, 1' de l'environnement immersif - par exemple, par un geste capté par une caméra 21 placée sur des lunettes de réalité virtuelle ou une utilisation d'un périphérique 41 tel qu'une manette de réalité virtuelle, etc.). En particulier, le gestionnaire 13 de fenêtre comporte un récepteur 11, 100 des données déclarées ic du contexte utilisateur, notamment le récepteur est une interface utilisateur 11 ou est apte à recevoir d'une interface utilisateur 21, 41. L'utilisateur U déclare des données ic relatives au contexte utilisateur notamment suite à une requête ic_rq de données de contexte utilisateur reproduite par une interface utilisateur 2 (tel que le dispositif de reproduction de l'environnement immersif, un écran - notamment l'écran d'un smartphone de l'utilisateur U), un haut-parleurs, etc). En particulier, le gestionnaire de fenêtre 13 comporte un générateur de requête (non illustré) apte à requérir une déclaration de données du contexte utilisateur ic_rq, notamment à une interface utilisateur 2. Par exemple, le gestionnaire de fenêtre 13 comporte un émetteur 101 apte à émettre la requête générée par le générateur de requête à l'interface utilisateur 2.

En particulier, l'analyseur 15 de contexte utilisateur cnx_{U} comporte un ou plusieurs des dispositifs suivants :
- le dispositif de mesure des données relatives à l'utilisateur et/ou à son environnement réel au moyen de capteur 20, 5 ;
- le générateur de requête d'une déclaration de données du contexte utilisateur ic_rq, notamment à une interface utilisateur 2 ;
- le récepteur 11, 100 des données déclarées ic du contexte utilisateur, notamment d'une interface utilisateur 21, 41.

A noter les capteurs 20 et 21 du dispositif de reproduction d'environnement immersif 2 sont soit un même capteur, soit des capteurs distincts.

En particulier, le gestionnaire de fenêtre 13 comporte un premier calculateur (non illustré) d'une valeur d'un paramètre de reproduction pd, pd' de la fenêtre d'affichage w en cours de modification notamment lors d'une phase de détermination de valeur de paramètre de reproduction Ph VPD.

En particulier, le gestionnaire de fenêtre 13 comporte un deuxième calculateur (non illustré) de la valeur du paramètre de reproduction pd*=vpd* de la fenêtre d'affichage w en cours de modification en fonction du contexte utilisateur courant cnx_{U}. Notamment, le deuxième calculateur est apte à déterminer la valeur du paramètre de reproduction en fonction du contexte utilisateur courant cnx_{U} lors de la phase de détermination de valeur de paramètre de reproduction Ph VPD. En particulier, le contexte utilisateur courant cnx_{U} utilisé par le deuxième calculateur pour déterminer la valeur d'un paramètre de reproduction de la fenêtre w, wi en cours de modification est fourni par l'analyseur 15 de contexte utilisateur cnx_{U}, et/ou le dispositif de mesure des données relatives à l'utilisateur et/ou à son environnement réel au moyen de capteur 20, 5 et/ou le récepteur 11, 100 de données déclarées ic du contexte utilisateur, notamment d'une interface utilisateur 21, 41.

Eventuellement, le premier calculateur consiste en ou comporte le deuxième calculateur de valeur du paramètre de reproduction.

Le gestionnaire de fenêtre 13 fournit alors une valeur d'un paramètre de reproduction de la fenêtre w, wi en cours de modification fonction du contexte utilisateur courant v_{pd}*=f(cnx_{U}) notamment en sortie de la détermination VPD_DT de la valeur du paramètre de reproduction en fonction du contexte utilisateur courant cnx_{U} et/ou de la phase de détermination de valeur de paramètre de reproduction Ph VPD.

Le gestionnaire de fenêtre 13 comporte le régulateur 13110 de paramètre de reproduction pd, pd' d'une fenêtre d'affichage w, lors d'une modification de la fenêtre d'affichage, à une valeur déterminée pd*=v_{pd}* en fonction d'un contexte utilisateur courant cnx_{U}. En particulier, le régulateur 13110 du paramètre de reproduction pd, pd' de la fenêtre d'affichage w utilise la valeur de paramètre de reproduction w(pd*)=w(pd*=v_{pd}*) préalablement déterminée notamment lors de la phase de détermination de valeur de paramètre de reproduction et/ou par le deuxième calculateur de la valeur du paramètre de reproduction en fonction du contexte utilisateur courant cnx_{U} w(pd*)=w(pd*= v_{pd}*=f(cnx_{U})).

En particulier, le gestionnaire de fenêtre 13 comporte un gestionnaire contextuel de fenêtre d'affichage 1311. Le gestionnaire contextuel de fenêtre d'affichage 1311 est apte à gérer une fenêtre d'affichage est fonction d'un contexte utilisateur cnx_{U}.

En particulier, le gestionnaire contextuel de fenêtre d'affichage 1311 comporte le régulateur 13110 de paramètre de reproduction pd, pd' d'une fenêtre d'affichage w, lors d'une modification de la fenêtre d'affichage, à une valeur déterminée pd*=v_{pd}* en fonction d'un contexte utilisateur courant cnx_{U}. Eventuellement, le gestionnaire contextuel de fenêtre d'affichage 1311 comporte en outre un ou plusieurs des dispositifs suivants :
- l'analyseur 15 de contexte utilisateur cnx_{U} ;
- le dispositif de mesure des données relatives à l'utilisateur et/ou à son environnement réel au moyen de capteur 20, 5 ;
- le générateur de requête d'une déclaration de données du contexte utilisateur ic_rq, notamment à une interface utilisateur 2 ;
- le récepteur 11, 100 des données déclarées ic du contexte utilisateur, notamment d'une interface utilisateur 21, 41 ;
- le deuxième calculateur de la valeur du paramètre de reproduction en fonction du contexte utilisateur courant cnx_{U}.

Dans un mode de réalisation particulier, un gestionnaire 1 d'environnement immersif est apte à gère un environnement immersif comportant 4 un poste de travail virtuel 40. Le poste de travail virtuel 40 comporte une fenêtre d'affichage 401, 402...40n associée à un traitement reproduisant des données produites par le traitement associé. Le gestionnaire 1 d'environnement immersif comporte un déclencheur 12 d'un transformateur 131 de fenêtres d'affichage. Le déclencheur 12 du transformateur 131 de fenêtres d'affichage est apte à déclencher pr_trg un régulateur 13110 de paramètres de reproduction de fenêtres d'affichage apte à régler un paramètre de reproduction pd, pd' de la fenêtre d'affichage à une valeur déterminée en fonction d'un contexte utilisateur courant cnx_{U} préalablement à la reproduction de la fenêtre d'affichage modifiée.

En particulier, un smartphone 1' comporte le gestionnaire 13 de fenêtres d'affichage et/ou le gestionnaire 1 d'environnement immersif.

Dans un mode de réalisation particulier, un système de réalité immersive 0 est, notamment, apte à générer et/ou gérer un environnement immersif. Le système de réalité immersive comporte :
- un dispositif 2 de reproduction d'environnement immersif ie ;
- un récepteur 100, 11 de contexte utilisateur cnx_{U} ; et
- un gestionnaire 1 d'environnement immersif.

Le gestionnaire d'environnement immersif 1 est apte à gère un environnement immersif comportant 4 un poste de travail virtuel 40. Le poste de travail virtuel 40 comporte une fenêtre d'affichage 401, 402...40n associée à un traitement reproduisant des données produites par le traitement associé. Le gestionnaire 1 d'environnement immersif comporte un déclencheur 12 d'un transformateur 131 de fenêtres d'affichage. Le déclencheur 12 du transformateur 131 de fenêtres d'affichage est apte à déclencher pr_trg un régulateur 13110 de paramètres de reproduction de fenêtres d'affichage apte à régler un paramètre de reproduction pd, pd' de la fenêtre d'affichage à une valeur déterminée en fonction d'un contexte utilisateur courant cnx_{U} préalablement à la reproduction de la fenêtre d'affichage modifiée.

En particulier, le récepteur 100 de contexte utilisateur cnxU est un dispositif parmi les suivants :
- une interface utilisateur du dispositif 2 de reproduction d'environnement immersif ;
- un capteur 20, 5.

En particulier, les différents dispositifs du système de réalité immersive 0 communique via un réseau de communication 3.

En particulier, le gestionnaire d'environnement immersif 1 comporte un récepteur100 apte à recevoir une requête wi_rq relative à une fenêtre d'affichage provenant notamment d'une interface utilisateur 21, voire d'un dispositif (non illustré) tel que le gestionnaire d'environnement immersif 1 lui-même, un processeur de traitement (non illustré) mettant en oeuvre un traitement associé à une des fenêtres d'affichage de l'environnement immersif 40, un gestionnaire de fenêtre d'affichage 13, etc.

En particulier, la requête reçue wi_rq relative à une fenêtre d'affichage par le gestionnaire d'environnement immersif 1 est notamment une requête d'ouverture d'une nouvelle fenêtre d'affichage wi_rq(op) associée à un nouveau traitement ou à un traitement en cours d'exécution, une requête de déplacement d'une fenêtre d'affichage wi_rq(dpct) indiquant éventuellement la position d'arrivée souhaitée wi_rq(pd'=v_{pd}'), une requête de réglage d'un paramètre de reproduction indiquant éventuellement la valeur du paramètre de reproduction souhaitée wi_rq(pd'=v_{pd}').

En particulier, le récepteur 100 d'une requête wi_rq relative à une fenêtre d'affichage estapte à la fournir à un déclencheur 12 de transformateur de la fenêtre d'affichage qui est apte à déclencher pr_trg, en fonction de la requête reçue wi_rq relative à une fenêtre d'affichage, le régulateur 13110 du paramètre de reproduction de la fenêtre d'affichage en fonction du contexte utilisateur cnx_{U}. En particulier, le déclencheur 12 de transformateur de la fenêtre d'affichage est apte à relayer la requête reçue wi_rq relative à une fenêtre d'affichage au gestionnaire de fenêtre d'affichage 13 pour effectuer la modification requise.

En particulier, le gestionnaire de fenêtre d'affichage 13 comporte un transformateur 1310 de fenêtre d'affichage en fonction de requête reçue wi_rq relative à une fenêtre d'affichage. Notamment, le gestionnaire de fenêtre d'affichage 13 comporte : un ouvreur 1310ₒ de fenêtre d'affichage W_OP en fonction de requête reçue wi_rq(op) d'ouverture d'une fenêtre d'affichage. Eventuellement, le gestionnaire de fenêtre d'affichage 13 comporte : un transformateur élémentaire 1310ₘ de paramètre de reproduction selon la requête wi_rq(pd'=v_{pd}'). Le transformateur 1310 de fenêtre d'affichage en fonction de requête reçue wi_rq relative à une fenêtre d'affichage comporte, par exemple, une ou plusieurs des dispositifs suivants :
- un ouvreur 1310ₒ de fenêtre en fonction de requête reçue wi_rq(op) d'ouverture d'une fenêtre d'affichage ;
- un transformateur élémentaire 1310ₘ de paramètre de reproduction selon la requête wi_rq(pd'=v_{pd}').

Eventuellement, le transformateur 1310 de fenêtre d'affichage fourni des paramètres de reproduction de la fenêtre de reproduction modifiée wi(pd), wi(pd') au régulateur 13110 apte à régler un ou plusieurs de ces paramètres de reproduction en fonction du contexte utilisateur courant cnx_{U}.

Ainsi, le régulateur 13110 est, en particulier, apte tenir compte de la modification souhaitée wi_rq. Par exemple, si la modification de position requise amène la fenêtre d'affichage dans une position dans laquelle sa lecture sera difficile pour l'utilisateur, notamment dans une zone de reproduction interdite, le réglage pourra rechercher la position acceptable la plus proche de la position requise (notamment dans une zone de reproduction autorisée, voire tolérée) pour déplacer la fenêtre d'affichage.

L'environnement immersif ie comporte alors l'ensemble des fenêtres d'affichage non modifiées {*wₙ*}_{*n*, *n*≠*i*} et la ou les fenêtres modifiées wi(pd*=v_{pd}*) pour lesquelles au moins un paramètre de reproduction a été réglée en fonction du contexte utilisateur cnx_{U}.

Soit un dispositif de reproduction 2 distinct du gestionnaire d'environnement immersif 1, soit gestionnaire d'environnement immersif 1 lui-même comporte un dispositif de reproduction 2, 14 de l'environnement immersif apte à recevoir le signal de reproduction de l'environnement immersif ie comportant le cas échéant une fenêtre modifiée pour laquelle au moins un paramètre de reproduction a été réglée en fonction du contexte utilisateur cnx_{U}.

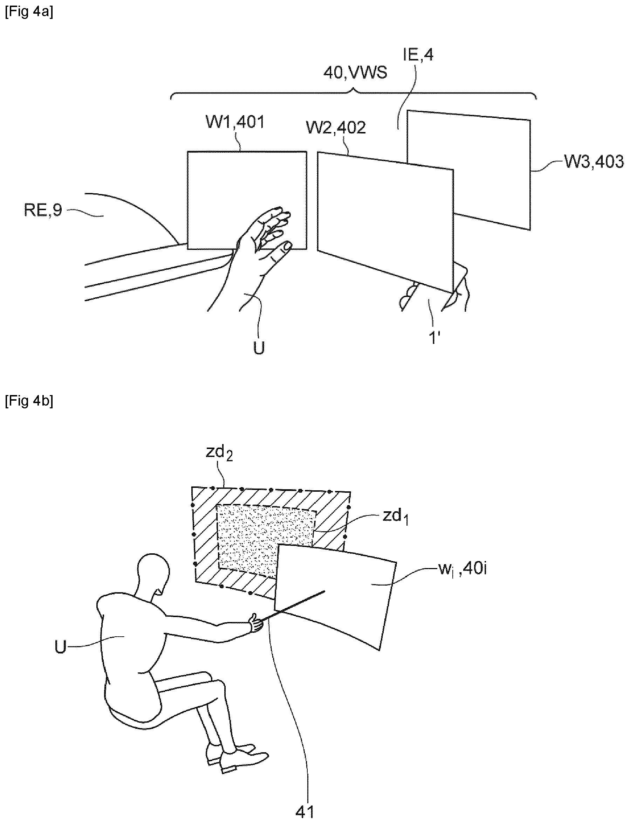

La figure 4a illustre un schéma simplifié d'un environnement immersif dans un cas d'usage particulier mis en oeuvre par un procédé de gestion d'un environnement immersif et/ou un système de réalité immersive soit selon l'invention, soit utilisant un procédé de gestion de fenêtres W_MNGT et/ou un gestionnaire de fenêtres d'affichage selon l'invention.

L'utilisateur U est dans un environnement réel 9, RE, en l'occurrence un véhicule dans l'exemple de la figure 4a. Il n'y dispose pas de poste de travail réel et utilise son smartphone 1' pour générer et gérer un poste de travail virtuel 40, VWS en réalité augmenté. Ainsi, un dispositif de reproduction de réalité augmenté par exemple des lunettes RA (non illustrée) permettent de reproduire le poste de travail virtuel 40, VWS comportant en l'occurrence 3 fenêtres d'affichage : W1,401 ; W2, 402 ; W3, 403.

Dans sa position de travail dans le véhicule, l'utilisateur U est assis avec l'impossibilité de se lever, de se déplacer, ni de se retourner.

Par conséquent, si lors d'une ouverture d'une nouvelle fenêtre, le dispositif de gestion de l'environnement immersif utilise la totalité de l'environnement tridimensionnelle, cette nouvelle fenêtre peut être ouverte dans le dos de l'utilisateur qui se trouve dans l'incapacité de la voir et donc d'interagir avec.

Une autre conséquence est liée au type d'interaction avec les fenêtres d'affichage. Par exemple pour déplacer une fenêtre d'affichage, l'utilisateur peut prendre l'une des fenêtres avec sa main (par exemple avec une position de la main qui semble à plat sur la fenêtre) puis déplacer celle-ci par un geste du bras vers l'emplacement souhaité. Le risque est que le déplacement étant mal contrôlé, la fenêtre se déplace en limite du champ visuel de l'utilisateur sachant que celui-ci devra faire des efforts physique pour se mettre face à celle-ci (torsion du buste et/ou des cervicales) avec néanmoins, le risque de mauvaise lecture des données affichées dans cette fenêtre, et/ou d'erreur d'interaction car en limite de zone d'interaction physique (difficulté à placer le bras, la main correctement pour interagir avec un élément spécifique affiché par la fenêtre d'affichage, par exemple un élément d'interaction d'un menu ou d'un onglet de la fenêtre d'affichage).

En utilisant l'invention, cela n'arriverait pas car les paramètres de reproduction de ces fenêtres ouvertes ou déplacées seraient réglés en fonction du contexte utilisateur, c'est-à-dire tiendrait compte du fait que l'utilisateur ne peut lire et/ou interagir que dans certaines parties de l'environnement immersif tridimensionnel, en l'occurrence dans une partie l'environnement immersif tridimensionnel devant l'utilisateur ayant un angle de 40 à 60° de chaque côté (champ de vision efficace) et à une hauteur de vue prédéfinie devant l'utilisateur propre à l'utilisateur et à sa position (assise, debout, allongée, etc.).

La figure 4b illustre un schéma simplifié illustrant des zones de reproductions réglées utilisées dans un mode de réalisation particulier de l'invention.

Les zones de reproduction réglées illustrées sont :
- une zone idéale zd1 dans laquelle non seulement la reproduction de fenêtres d'affichage est autorisée et même préférée à une autre zone de reproduction autorisée tant qu'il reste suffisamment d'espace pour y ouvrir ou déplacer une fenêtre d'affichage ;
- une zone de tolérance zd2 dans laquelle la reproduction de fenêtres d'affichage est autorisée (tolérée) notamment si la zone idéale zd1 est pleine (c'est-à-dire s'il n'y a plus d'espace pour ouvrir ou déplacer une fenêtre d'affichage dans la zone idéale zd1).

Dans l'exemple de la figure 4b, l'utilisateur U déplace une fenêtre d'affichage wi, 40i notamment au moyen d'un périphérique d'interaction 41. La nouvelle position de la fenêtre d'affichage wi, 40i requise par l'utilisateur U. L'invention permet de régler les paramètres de reproduction de cette fenêtre d'affichage wi, 40i déplacée de telle sorte que la fenêtre d'affichage soit déplacée non pas à la position requise mais soit dans la zone idéale zd1 (notamment s'il y reste suffisamment d'espace de reproduction libre), soit à la position la plus proche éventuellement à cheval sur les zone idéales zd1 et zd2. Dans ce deuxième cas, cela donne l'impression à l'utilisateur U que la fenêtre d'affichage wi, 40i est attirée par la zone de tolérance zd2.

A noter dans l'exemple de la figure 4b, la zone de tolérance zd2 inclut la zone idéale zd1, mais il peut s'agir dans d'autres cas d'usage de zones distinctes.

Ainsi, l'invention propose une prise en compte du contexte (capacités ou incapacités physionomiques de l'utilisateur, position de l'utilisateur, possibilités offertes par l'environnement ...) et de permettre à l'utilisateur d'optimiser la disposition de l'espace bureautique en tenant compte de ce contexte. En fonction de sa position et de son environnement, l'utilisateur se verra donc indiqué les secteurs à privilégier pour y positionner ses fenêtres (limites latérales mais également en terme bas/haut et de distance/profondeur) pour plus de confort et éviter les risques musculosquelettiques ou ophtalmiques. Dans un cas d'usage particulier, les limites indiquées n'empêchent pas l'utilisateur de positionner des fenêtres dans ces-dites limites, notamment lorsque ces fenêtres ont un usage plus occasionnel.

Les changements de contexte d'utilisation (exemple passage d'une position assise à une position debout) seront soit déclaratifs, soit détectés par le système.

D'autres cas d'usage sont notamment :
Situation 1 : L'utilisateur U est debout dans un environnement dégagé et en l'absence de personnes à proximité => il dispose son poste de travail tout autour de lui (à 360°). Eventuellement, l'invention peut déterminer une zone de reproduction réglée de type zone de reproduction préférée qui se déplacera à chaque déplacement de l'utilisateur pour rester face à lui et correspond au champ de vision efficace. Ainsi, lors de l'ouverture d'une nouvelle fenêtre, celle-ci s'ouvrira dans cette zone de reproduction préférée s'il y reste assez d'espace ou à proximité de celle-ci afin d'éviter à l'utilisateur des mouvements inutiles pour rechercher la nouvelle fenêtre.
Situation 2 : L'utilisateur U est debout mais avec espace limité autour de lui. Par exemple, l'utilisateur U est debout dos à un mur. L'poste de travail préconisé est alors limité à 180 degrés pour éviter par exemple les ouvertures (fenêtres, portes) côté mur. Ainsi, lors d'utilisation par l'invention de zone de reproduction réglée, l'invention détermine par exemple une zone de reproduction interdite coté mûr dans laquelle une fenêtre d'affichage ne peut pas être reproduite. Par exemple, si l'utilisateur U requiert un déplacement d'une fenêtre d'affichage dans cette zone de reproduction interdite, tout se passe comme si la zone de reproduction interdite repoussait la fenêtre d'affichage à l'extérieur de cette zone de reproduction interdite.
Situation 3 : L'utilisateur U est assis à une table/bureau. L'invention règle les paramètres de reproduction de fenêtres d'affichage afin que l'poste de travail soit alors latéralement de 90° maximum (voire seulement de 60° en raison du champ de vision efficace) - centré face à l'utilisateur - et verticalement suivant un axe, par exemple, « horizon - 5° » / « horizon +30° »
Situation 4 : L'utilisateur U est assis dans un canapé. Dans ce cas, l'invention règle les paramètres de reproduction de fenêtres d'affichage afin que l'poste de travail ait un angle vertical décalé vers le haut par rapport à la situation précédente.
Situation 5 : L'utilisateur U est assis dans le train avec la fenêtre à sa droite et un tiers assis à sa gauche. L'invention règle les paramètres de reproduction de fenêtres d'affichage afin que l'poste de travail soit tronqué sur la gauche pour éviter à la personne de porter son regard sur la gauche et empiéter dans la « bulle » du tiers.
Situation 6 : L'utilisateur U est une personne à mobilité réduite (avec mobilité des cervicales limitée ou absente) dans un fauteuil motorisé. L'invention règle les paramètres de reproduction de fenêtres d'affichage afin que l'poste de travail tiennent compte du champ de vision efficace réduit de l'utilisateur U.
Situation 7 : Lors d'un éclairage latéral (fenêtre avec soleil dans le cadre), l'invention règle les paramètres de reproduction de fenêtres d'affichage de telle sorte que l'utilisateur ne regarde pas cet éclairage (le soleil) de face. Par exemple, l'invention détermine une zone de reproduction interdite comportant l'espace où se trouve l'éclairage latéral.

Les changements de position (exemple situation 1 à situation 3) entrainent une adaptation (automatique ou manuelle) par l'invention des paramètres de reproduction des fenêtres d'affichage du poste de travail et, par conséquence, du poste de travail.

L'invention vise aussi un support. Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique ou encore un moyen d'enregistrement magnétique, par exemple une disquette ou un disque dur.

D'autre part, le support d'informations peut être un support transmissible tel qu'un signal électrique ou optique qui peut être acheminé via un câble électrique ou optique, par radio ou par d'autres moyens. Le programme selon l'invention peut être en particulier téléchargé sur un réseau notamment de type Internet.

Alternativement, le support d'informations peut être un circuit intégré dans lequel le programme est incorporé, le circuit étant adapté pour exécuter ou pour être utilisé dans l'exécution du procédé en question.

Dans une autre implémentation, l'invention est mise en oeuvre au moyen de composants logiciels et/ou matériels. Dans cette optique le terme module peut correspondre aussi bien à un composant logiciel ou à un composant matériel. Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonction selon la description ci-dessus. Un composant matériel correspond à tout élément d'un ensemble matériel (ou hardware) apte à mettre en oeuvre une fonction ou un ensemble de fonctions.

## Revendications

1. Procédé de gestion de fenêtres d'affichage d'un poste de travail virtuel dans un environnement immersif, une fenêtre d'affichage étant associée à un traitement reproduisant des données produites par le traitement associé, le procédé de gestion de fenêtres comportant régler un paramètre de reproduction d'une fenêtre d'affichage, lors d'une modification de la fenêtre d'affichage, à une valeur déterminée en fonction d'un contexte utilisateur courant.

2. Procédé de gestion de fenêtres d'affichage selon la revendication précédente, le procédé de gestion de fenêtres comportant déterminer la valeur du paramètre de reproduction de la fenêtre d'affichage en cours de modification en fonction du contexte utilisateur courant.

3. Procédé de gestion de fenêtres d'affichage selon l'une des revendications précédentes, le procédé de gestion de fenêtres comportant déterminer la valeur du paramètre de reproduction de la fenêtre d'affichage en cours de modification en fonction d'une zone de reproduction réglée dans laquelle une reproduction d'une fenêtre d'affichage du poste de travail virtuel est soumise à une règle de reproduction, la zone de reproduction réglée étant fonction du contexte utilisateur courant.

4. Procédé de gestion de fenêtres d'affichage selon la revendication précédente, le procédé de gestion de fenêtres comportant déterminer une zone de reproduction réglée en fonction du contexte utilisateur courant préalablement à la détermination de la valeur du paramètre de reproduction de la fenêtre d'affichage en cours de modification.

5. Procédé de gestion de fenêtres d'affichage selon l'une des revendications 3 ou 4, dans lequel la règle de reproduction associée à une zone de reproduction réglée est une règle parmi les suivante :
- une autorisation de reproduction de fenêtres d'affichage dans la zone de reproduction réglée, dite zone autorisée ;
- une interdiction de reproduction de fenêtres d'affichage dans la zone de reproduction réglée, dite zone interdite ;
- une priorisation de reproduction de fenêtres d'affichage dans la zone de reproduction réglée, dite zone idéale, tant que la zone de reproduction réglée comporte un espace libre suffisant pour reproduire la fenêtre d'affichage ;
- une tolérance de reproduction de fenêtres d'affichage dans la zone de reproduction réglée, dite zone de tolérance, dans laquelle une reproduction d'une fenêtre d'affichage est autorisée si la zone idéale ne comporte pas un espace libre suffisant pour reproduire la fenêtre d'affichage.

6. Procédé de gestion de fenêtres d'affichage selon l'une des revendications précédentes, dans lequel modifier la fenêtre d'affichage est une modification parmi les suivantes :
- ouvrir de la fenêtre d'affichage ;
- déplacer d'une fenêtre d'affichage ;
- redimensionner la fenêtre d'affichage.

7. Procédé de gestion de fenêtres d'affichage selon l'une des revendications précédentes, dans lequel le paramètre de reproduction de la fenêtre d'affichage est un paramètre parmi les suivants :
- la position de reproduction de la fenêtre d'affichage ;
- la largeur de la fenêtre d'affichage ;
- la hauteur de la fenêtre d'affichage ;
- la dimension de la fenêtre d'affichage.

8. Procédé de gestion de fenêtres d'affichage selon l'une des revendications précédentes, le procédé de gestion de fenêtres comportant : mesurer le contexte utilisateur courant au moyen d'au moins un capteur.

9. Procédé de gestion de fenêtres d'affichage selon l'une des revendications 1 à 7, le procédé de gestion de fenêtres comportant requérir le contexte utilisateur courant au moyen d'une interface utilisateur et recevoir le contexte utilisateur déclaré de l'interface utilisateur.

10. Procédé de gestion de fenêtres d'affichage selon l'une des revendications précédentes, dans lequel le contexte utilisateur courant comporte une contrainte utilisateur.

11. Procédé de gestion de fenêtres d'affichage selon l'une des revendications précédentes, dans lequel le contexte utilisateur courant comporte des données relatives à un utilisateur lors de la modification de la fenêtre d'affichage parmi les données suivantes :
- des données déclarées du contexte utilisateur courant ;
- des données mesurées du contexte utilisateur courant ;
- des données de position de l'utilisateur ;
- des données de champ visuel de l'utilisateur ;
- des données de mobilité de l'utilisateur ;
- des données relatives à l'environnement réel dans lequel se trouve l'utilisateur.

12. Procédé de gestion d'un environnement immersif comportant un poste de travail virtuel, le poste de travail virtuel comportant une fenêtre d'affichage associée à un traitement reproduisant des données produites par le traitement associé, le procédé de gestion d'environnement immersif comportant déclencher une modification d'une fenêtre d'affichage, le déclenchement de la modification de la fenêtre d'affichage déclenchant régler un paramètre de reproduction d'une fenêtre d'affichage à une valeur déterminée en fonction d'un contexte utilisateur courant préalablement à la reproduction de la fenêtre d'affichage modifiée.

13. Programme comprenant des instructions de code de programme pour l'exécution des étapes du procédé de gestion de fenêtres d'affichage selon l'une des revendications 1 à 11 et/ou du procédé de gestion d'un environnement immersif selon la revendication précédente lorsque ledit programme est exécuté par un processeur.

14. Gestionnaire de fenêtres d'affichage d'un poste de travail virtuel dans un environnement immersif, une fenêtre d'affichage étant associée à un traitement reproduisant des données produites par le traitement associé, le gestionnaire de fenêtres d'affichage comportant un régulateur de paramètres de reproduction de fenêtres d'affichage apte à régler, lors d'une modification d'une fenêtre d'affichage, un paramètre de reproduction de la fenêtre d'affichage à une valeur déterminée en fonction d'un contexte utilisateur courant.

15. Système de réalité immersive comportant :
- un dispositif de reproduction d'environnement immersif ;
- un récepteur de contexte utilisateur ; et
- un gestionnaire d'environnement immersif comportant un poste de travail virtuel, le poste de travail virtuel comportant une fenêtre d'affichage associée à un traitement reproduisant des données produites par le traitement associé, le gestionnaire d'environnement immersif comportant un déclencheur du transformateur de fenêtres d'affichage, le déclencheur du transformateur de fenêtres d'affichage étant apte à déclencher un régulateur de paramètres de reproduction de fenêtres d'affichage apte à régler un paramètre de reproduction de la fenêtre d'affichage à une valeur déterminée en fonction d'un contexte utilisateur courant préalablement à la reproduction de la fenêtre d'affichage modifiée.

16. Système de réalité immersive selon la revendication précédente, dans lequel le récepteur de contexte utilisateur est un dispositif parmi les suivants :
- une interface utilisateur du dispositif de reproduction d'environnement immersif ;
- un capteur.
